# EUROPEAN PATENT APPLICATION

(11) **EP 4 129 144 A1**
(43) Date of publication of application: **08.02.2023**
(21) Application number: 21780773.4
(22) Date of filing: 09.02.2021
(51) Int. Cl.: A47L 11/283, C10B 43/04, E01H 1/05

(54) **CLEANING DEVICE AND METHOD FOR CLEANING TOP OF COKE OVEN**

(30) Priority: 30.03.2020 JP 2020061412
(71) Applicant: JFE Steel Corporation, Tokyo 100-0011 (JP)
(72) Inventor: FUKUCHI, Ryota, Tokyo 100-0011 (JP); KOBAYASHI, Masaki, Tokyo 100-0011 (JP); TAKAKI, Yuki, Tokyo 100-0011 (JP); ISHIDA, Kyohei, Tokyo 100-0011 (JP)
(74) Representative: Grünecker Patent- und Rechtsanwälte PartG mbB
(86) International application number: PCT/JP2021/004820
(87) International publication number: WO 2021/199691

(57) **Abstract**

Provided are a cleaning device that can properly and efficiently clean a place such as a coke oven top part where an obstacle is present, can perform cleaning irrespective of whether or not a coal charging car is operating, and has a simple and compact structure and a method for cleaning an oven top of a coke oven.

The cleaning device is a cleaning device that travels on a road surface and collects an accumulated substance accumulated on the road surface and includes a travelling trolley 1; collecting means 2 that is provided on a front face part of the travelling trolley 1 and collects the accumulated substance accumulated on the road surface in front of the travelling trolley 1 as the travelling trolley 1 travels forward; and sweeping means 3 that is provided on the travelling trolley 1 and sweeps the accumulated substance accumulated on the road surface beside the travelling trolley 1 toward a position in front of the travelling trolley 1.

## Description

### Technical Field

The present invention relates to a cleaning device for cleaning and removing, for example, coal powder (accumulated substance) accumulated on a road surface such as an oven top part of a coke oven for the purpose of preventing powder dust from flying apart and protecting an oven body in the coke oven and an oven top cleaning method using the device.

### Background Art

In a coke factory, fallen powder (accumulated substance) such as coal powder is accumulated on an oven top part of a coke oven due to leakage of coal powder from a coal charging car for charging coal into the oven and leakage of coal powder from a coal storage. Therefore, the fallen powder (accumulated substance) accumulated on the oven top part is cleaned and removed for the purpose of preventing the powder dust from flying apart and protecting an oven body. However, the work on the oven top part for cleaning and removing the fallen powder is hard work conducted under a high-temperature/dusty environment and is risky work that may lead to heat stroke and inhalation of powder dust.

As a method for cleaning an oven top part of a coke oven, Patent Literature 1 discloses a method for performing suction cleaning after coal charging by a suction-type cleaner (suction nozzle) provided in a coal charging car for charging coal into the oven.

Patent Literature 2 discloses, as a cleaning vehicle that can clean a wide area of a floor surface, a cleaning vehicle that includes a main brush that rotates at a central part of a bottom part of the vehicle and sweeps up dust on a floor surface into a dust box and a side brush that rotates at a side part of the bottom part of the vehicle and collects dust in a side portion including an outer edge portion of a cleaning region of the main brush on the floor surface toward the central part of the bottom part.

### Citation List

### Patent Literature

PTL 1: Japanese Unexamined Patent Application Publication No. 8-311456
PTL 2: Japanese Unexamined Patent Application Publication No. 3-144004

### Summary of Invention

### Technical Problem

However, the conventional arts have the following problems.

First, the method of Patent Literature 1 has the problems such as the following (i) to (iii): (i) the cleaner is provided in the coal charging car and therefore can clean only an oven top where coal is charged only during operation of the coal charging car, (ii) maintenance of the cleaner is difficult during operation of the coal charging car, and (iii) the cleaner is a suction-type cleaner and is therefore likely to cause troubles such as bag filter clogging and nozzle clogging resulting from suction of mortar water.

Furthermore, in a case where the cleaning vehicle of Patent Literature 2 is applied to cleaning of an oven top part of a coke oven, there may arise problems such as the following (i) and (ii): (i) a vehicle body size have to be large since dust is accumulated in a hopper provided inside the vehicle body and is therefore not suitable for cleaning of an oven top part of a coke oven and (ii) the dust needs to be manually discharged from the hopper.

In view of this, an object of the present invention is to solve the problems of the conventional arts and provide a self-propelled cleaning device that cleans a road surface such as an oven top part of a coke oven, specifically, a cleaning device that can properly and efficiently clean the oven top part where an obstacle is present, can perform the cleaning irrespective of whether or not a coal charging car is operating, has a simple and compact structure, is easy to maintain, and allows maintenance to be done even during operation of the coal charging car. Another object of the present invention is to provide a cleaning method for properly and efficiently cleaning an oven top part by using the cleaning device.

### Solution to Problem

The present invention for solving the above problems is summarized as follows.
[1] A cleaning device that travels on a road surface and collects an accumulated substance accumulated on the road surface, including a travelling trolley (1); collecting means (2) that is provided on a front face part of the travelling trolley (1) and collects the accumulated substance accumulated on the road surface in front of the travelling trolley (1) as the travelling trolley (1) travels forward; and sweeping means (3) that is provided on the travelling trolley (1) and sweeps the accumulated substance accumulated on the road surface beside the travelling trolley (1) toward a position in front of the travelling trolley (1).
[2] The cleaning device according to [1], wherein the sweeping means (3) includes a rotary brush (30) that is movable in a width direction of the travelling trolley (1).
[3] The cleaning device according to [2], wherein the sweeping means (3) includes a rail (31) provided along the width direction of the travelling trolley (1), a holding arm (32) slidable along the rail (31), and drive means (33) that slides the holding arm (32) along the rail (31); and the rotary brush (30) is held by the holding arm (32).
[4] The cleaning device according to [3], wherein the holding arm (32) is also provided with a collecting plate (34) that collects the accumulated substance at a position behind the rotary brush (30).
[5] The cleaning device according to any one of [2] to [4], wherein the rotary brush (30) is held in an inclined state so that only a front end portion thereof in a lengthwise direction of the travelling trolley (1) makes contact with the road surface.
[6] The cleaning device according to any one of [1] to [5], further including a load sensor (4) that measures a load applied to the collecting means (2).
[7] The cleaning device according to any one of [1] to [6], wherein the collecting means (2) is a dozer (20) whose lower end makes contact with the road surface.
[8] The cleaning device according to [7], wherein the dozer (20) includes a brush (21) on a lower end part thereof.
[9] The cleaning device according to [7] or [8], wherein the dozer (20) includes a dozer body part (20a) that is provided along the width direction of the travelling trolley (1) and a side dozer part (20b) that is connected to one end of the dozer body part (20a) and is for surrounding the accumulated substance swept from one side in the width direction by the sweeping means (3) so that the accumulated substance does not escape to the other side in the width direction.
[10] The cleaning device according to [9], wherein the dozer body part (20a) is inclined with respect to the width direction of the travelling trolley (1) so that the one end thereof to which the side dozer part (20b) is connected is located closer to the travelling trolley (1) than the other end thereof.
[11] The cleaning device according to any one of [7] to [10], wherein the dozer (20) is supported on the travelling trolley (1) by a support arm (5) interposed therebetween; and the cleaning device further includes, at a point along the support arm (5), a load sensor (4) that measures a load applied to the collecting means (2).
[12] The cleaning device according to [11], wherein the dozer (20) is rotationally movable upward about the support arm (5) and rotationally moves upward when an excessive load is detected by the load sensor (4).
[13] A method for cleaning an oven top part of a coke oven by causing the cleaning device according to any one of [1] to [12] to travel on the oven top part of the coke oven as the road surface and collecting the accumulated substance accumulated on the road surface, the method including causing the travelling trolley (1) to travel forward; causing the collecting means (2) to collect the accumulated substance accumulated on the road surface in front of the travelling trolley (1) while causing the sweeping means (3) to sweep the accumulated substance accumulated on the road surface beside the travelling trolley (1) toward a position in front of the travelling trolley (1); and moving the travelling trolley (1) to a place close to a coal charging hole after collection of the accumulated substance in a predetermined region and gathering the accumulated substance in the place.
[14] The method for cleaning an oven top part of a coke oven according to [13], wherein in a case where a region beside a rail for a coal charging car on the oven top part of the coke oven is cleaned by using the cleaning device in which the collecting means (2) is a dozer (20) whose lower end makes contact with the road surface and the sweeping means (3) includes a rotary brush (30) that is movable in the width direction of the travelling trolley (1), the travelling trolley (1) is moved forward along the rail for the coal charging car, the accumulated substance accumulated on the road surface in front of the travelling trolley (1) is collected by the dozer (20) while sweeping the accumulated substance accumulated on the road surface close to the rail for the coal charging car beside the travelling trolley (1) toward a position in front of the travelling trolley (1) by driving the rotary brush (30) to rotate in a state where the rotary brush (30) has moved to a position beside the travelling trolley (1); and when the travelling trolley (1) passes an obstacle beside the rail for the coal charging car, the rotary brush (30) is moved in the width direction of the travelling trolley (1) to avoid the obstacle and sweep the accumulated substance accumulated on the road surface around the obstacle toward a position in front of the travelling trolley (1).
[15] The method for cleaning an oven top part of a coke oven according to [14], further including causing the cleaning device provided with an optical distance measurement sensor to travel in a region to be cleaned and thereby measuring a position of the obstacle by the distance measurement sensor to acquire map data; programming a route of the travelling trolley (1) and movement of the rotary brush (30) on a basis of the map data; and automatically performing cleaning by the cleaning device in accordance with the program.

### Advantageous Effects of Invention

By using the cleaning device according to the present invention, a place such as an oven top part of a coke oven where an obstacle is present can be properly and efficiently cleaned, and cleaning can be performed irrespective of whether or not a coal charging car is operating. Furthermore, the cleaning device according to the present invention does neither have accumulated substance suction means nor a hopper, and therefore has a simple and compact structure, is easy to maintain, and allows maintenance to be done even during operation of the coal charging car.

Furthermore, by using the cleaning device which has the sweeping means including a rotary brush that is movable in a width direction of the travelling trolley, an obstacle can be avoided while keeping forward traveling of the travelling trolley, and more efficient cleaning work can be performed.

Furthermore, by the method according to the present invention, an oven top part of a coke oven can be properly and efficiently cleaned by using the cleaning device.

### Brief Description of Drawings

[Fig. 1] Fig. 1 is an overall perspective view illustrating an embodiment of a cleaning device according to the present invention.
[Fig. 2] Fig. 2 is a plan view of the cleaning device according to the embodiment in Fig. 1.
[Fig. 3] Fig. 3 is a side view of the cleaning device according to the embodiment in Fig. 1.
[Fig. 4] Fig. 4 is a plan view partially illustrating sweeping means in the cleaning device according to the embodiment in Fig. 1.
[Fig. 5] Fig. 5 is a side view partially illustrating a rotary brush and a holding arm that constitute the sweeping means in the cleaning device according to the embodiment in Fig. 1.
[Fig. 6] Fig. 6 is an explanatory view schematically illustrating a support structure for a dozer that constitutes collecting means in the cleaning device according to the embodiment in Fig. 1.
[Fig. 7] Fig. 7 illustrates an experiment device used to survey how a configuration of a brush of the dozer and pressing of brush bristle tips against a road surface influence a fallen powder collection rate in the cleaning device according to the embodiment in Fig. 1, and Fig. 7(a) is a plan view, and Fig. 7(b) is a side view.
[Fig. 8] Fig. 8 is an explanatory view of operation of a dozer illustrating another embodiment of the cleaning device according to the present invention.
[Fig. 9] Fig. 9 is a plan view illustrating another embodiment of the cleaning device according to the present invention.
[Fig. 10] Fig. 10 is an explanatory view illustrating an example of operations (operating procedure) performed in a case where a predetermined region beside a rail for a coal charging car is cleaned by the cleaning device according to the embodiment in Fig. 1.
[Fig. 11] Fig. 11 is an explanatory view illustrating operations (operating procedure) for transferring an accumulated substance to an accumulated substance gathering place next to the series of operations (operating procedure) of the device illustrated in Fig. 10.
[Fig. 12] Fig. 12 is an explanatory view illustrating a situation where an accumulated substance accumulated on a road surface beside a travelling trolley (in a region close to a rail for a coal charging car) is swept toward a position in front of the travelling trolley in the cleaning device according to the embodiment in Fig. 1.
[Fig. 13] Fig. 13 is an explanatory view illustrating an example of an avoiding operation of the travelling trolley performed in a case where an abnormal load on the dozer is confirmed by a load sensor in the cleaning device according to the embodiment in Fig. 1.
[Fig. 14] Fig. 14 is an explanatory view illustrating a state of cleaning work beside a rail for a coal charging car by the cleaning device according to the embodiment in Fig. 9.
[Fig. 15] Fig. 15 is an explanatory view illustrating a state of cleaning work beside a rail for a coal charging car by the cleaning device according to the embodiment in Fig. 9 (Fig. 15(b)) in comparison with a state of cleaning work by the cleaning device according to the embodiment in Fig. 1 (Fig. 15(a)).

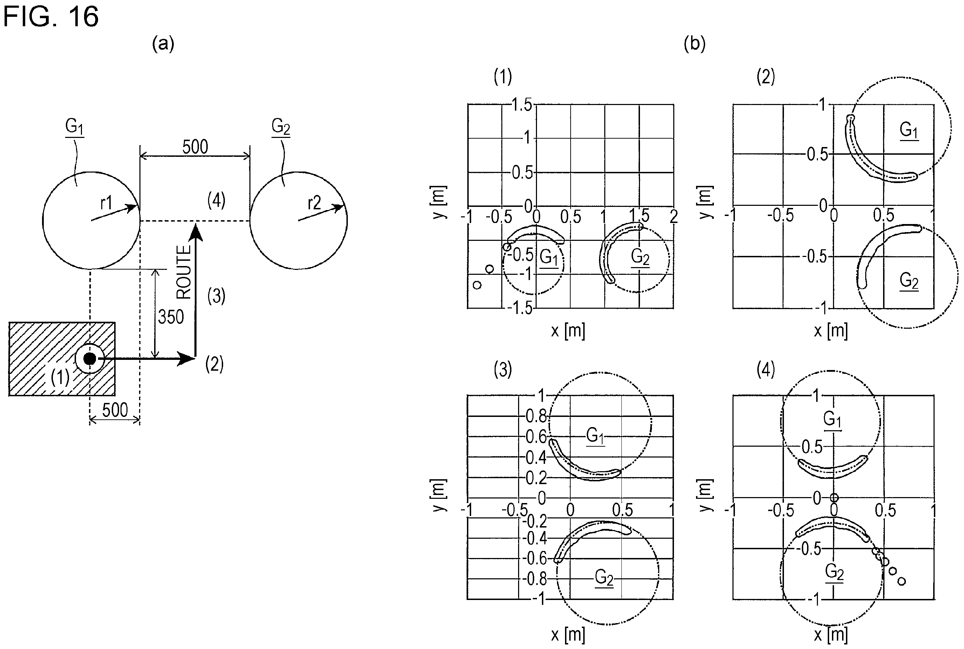

[Fig. 16] Fig. 16 illustrates results obtained by causing a cleaning device provided with an optical distance measurement sensor on a road surface on an oven top part to acquire map data of the oven top part and measuring a surrounding environment by the distance measurement sensor, and Fig. 16(a) is an explanatory view illustrating actual positions of two ascending pipes and measurement positions (1) to (4) where the surrounding environment was measured by the distance measurement sensor, and Fig. 16(b) is an explanatory view illustrating results of measurement in the measurement positions (1) to (4).
[Fig. 17] Fig. 17 is an explanatory view illustrating a simulated facility of an oven top part of a coke oven used in Example and movement of a cleaning device therein. Description of Embodiments

A cleaning device (hereinafter referred to as an "oven top cleaning device") of the present invention is, for example, a cleaning device that travels (self-travels) on an oven top part of a coke oven as a road surface and cleans a coke oven top by collecting fallen powder (accumulated substance) such as lime powder accumulated on the road surface. The oven top cleaning device includes a travelling trolley 1, and fallen powder collecting means 2 (collecting means) and fallen powder sweeping means 3 (sweeping means) that are mounted on the travelling trolley 1.

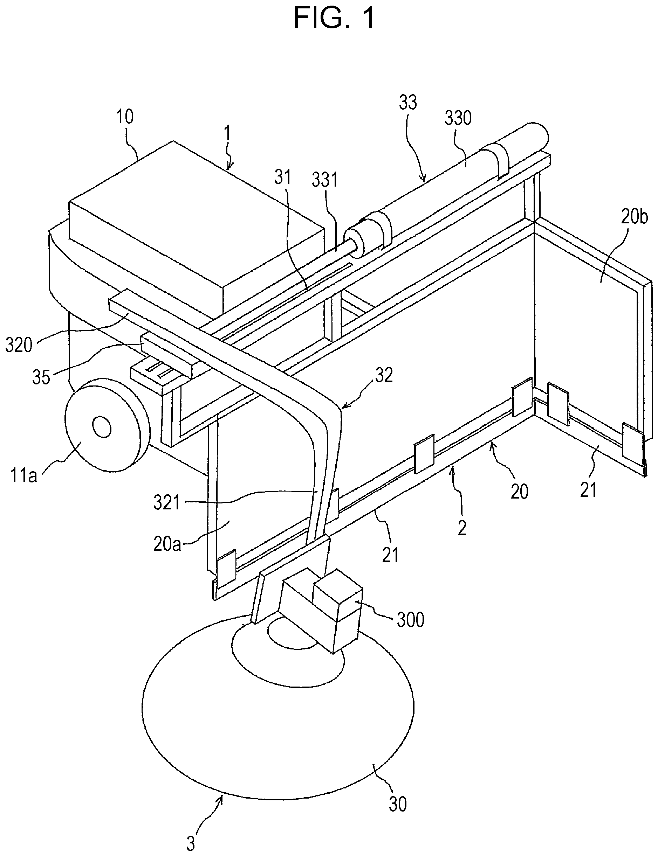

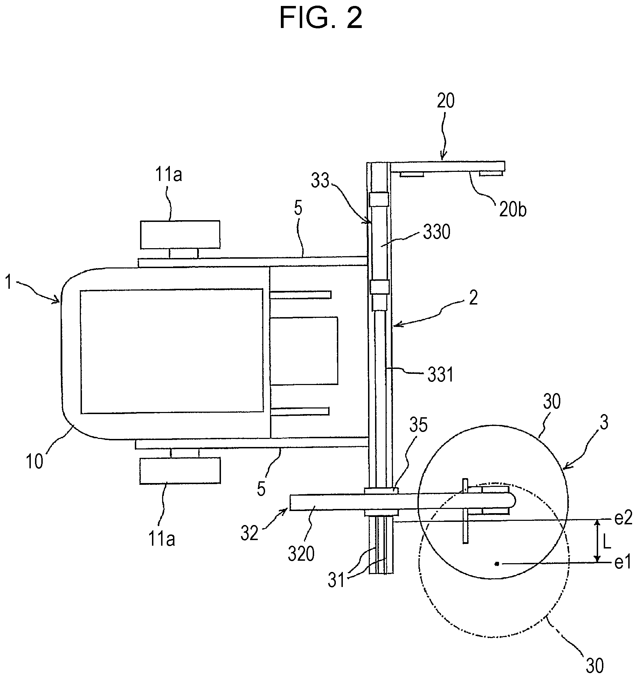

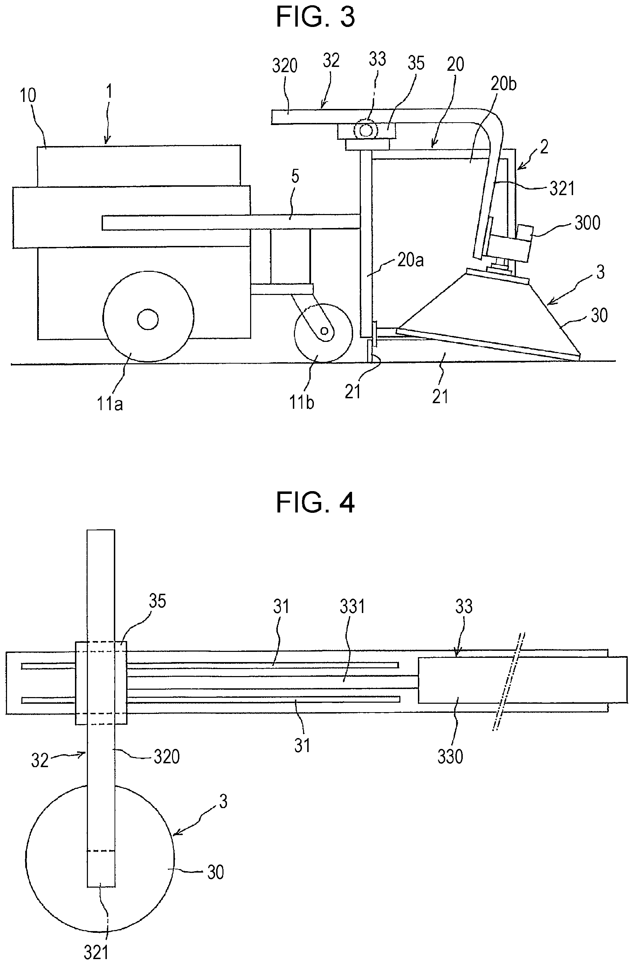

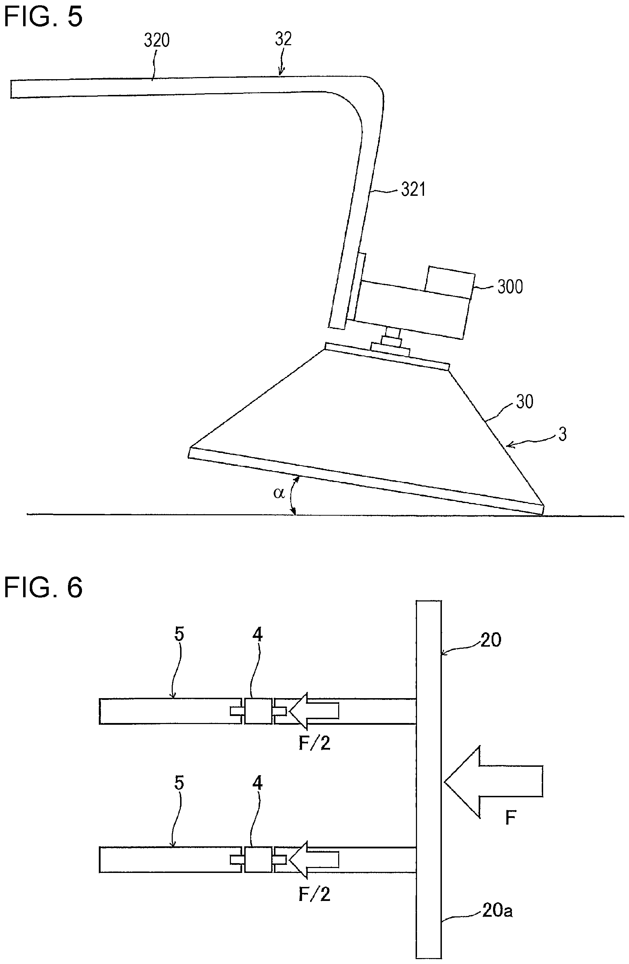

Figs. 1 to 6 illustrate an embodiment of the oven top cleaning device according to the present invention. Fig. 1 is an overall perspective view, Fig. 2 is a plan view, Fig. 3 is a side view, Fig. 4 is a plan view partially illustrating the fallen powder sweeping means 3, Fig. 5 is a side view partially illustrating a rotary brush 30 and a holding arm 32 that constitute the fallen powder sweeping means 3, and Fig. 6 is an explanatory view schematically illustrating a support structure for a dozer 20 that constitutes the fallen powder collecting means 2.

The fallen powder collecting means 2 is provided on a front face part of the travelling trolley 1 and is means for collecting fallen powder accumulated on a road surface in front of the travelling trolley 1 as the travelling trolley 1 travels forward. In the present embodiment, the fallen powder collecting means 2 includes the dozer 20 (blade). Note that the fallen powder collecting means 2 may include a brush body or a scraper instead of the dozer.

The fallen powder sweeping means 3 is provided on a front side of the travelling trolley 1 and sweeps fallen powder accumulated on the road surface in a region beside the travelling trolley 1 (i.e., fallen powder that cannot be collected by the fallen powder collecting means 2) toward a region in front of the travelling trolley 1. The fallen powder thus swept toward the region in front of the travelling trolley 1 by the fallen powder sweeping means 3 is also collected by the fallen powder collecting means 2. The fallen powder sweeping means 3 according to the present embodiment includes the rotary brush 30 that is movable in a width direction of the travelling trolley 1.

The travelling trolley 1 is a self-propelled trolley and includes a body 10 and wheels 11a and 11b for travelling (the wheel 11a is a drive wheel). The body 10 is provided with members such as a drive/steering mechanism (not illustrated) and a control device (not illustrated) that controls operations of the drive/steering mechanism and the rotary brush 30 in addition to the fallen powder collecting means 2 (the dozer 20) and the fallen powder sweeping means 3 (the rotary brush 30 and others). By controlling the drive/steering mechanism by the control device, the travelling trolley 1 can self-travel in any direction at any timing on the road surface of the oven top part of the coke oven in accordance with a predetermined program or a command from a control room. Typically, the travelling trolley 1 autonomously travels along a preprogrammed course and cleans the road surface during the autonomous travelling.

The dozer 20 that constitutes the fallen powder collecting means 2 has a lower end that makes contact with the road surface and thereby collects fallen powder accumulated on the road surface. The dozer 20 includes a brush 21 for collecting fallen powder on a lower end part thereof. This is to increase contact between the dozer and the road surface at a position where the dozer 20 makes contact with the road surface and thereby prevent failure to collect fallen powder.

The dozer 20 (dozer body part) is provided along the width direction of the travelling trolley 1. In the present embodiment, the dozer 20 includes a dozer body part 20a provided along the width direction of the travelling trolley 1 and a side dozer part 20b connected to one end part of the dozer body part 20a. The side dozer part 20b is for surrounding (blocking) fallen powder swept from one side in the width direction by the fallen powder sweeping means 3 (the rotary brush 30) so that the fallen powder does not escape to the other side in the width direction. That is, the dozer 20 is configured such that the dozer body part 20a and the side dozer part 20b connected to the dozer body part 20a form an L shape in plan view viewed from above. The dozer 20 is supported on a front face part of the travelling trolley 1 by a pair of support arms 5 provided on the front part of the travelling trolley 1.

Although a width of the dozer body part 20a (a width in the width direction of the travelling trolley 1) is not limited in particular, the width of the dozer body part 20a is preferably within a range from a width equivalent to the body width of the travelling trolley 1 to a width that is approximately three times as large as the body width of the travelling trolley 1 since a load caused by collected fallen powder becomes too large when the width of the dozer body part 20a becomes too large. Furthermore, although a width of the side dozer part 20b (a width in a lengthwise direction of the travelling trolley 1) is not limited in particular, the width of the side dozer part 20b is suitably approximately 10% to 50% of the width of the dozer body part 20a.

In the present embodiment, a load sensor 4 for measuring a load applied to the dozer 20 (the fallen powder collecting means 2) is provided. In a case where the load measured by the load sensor 4 is an abnormal value (an abnormal load is detected), that is, in a case of an excessive load, it is determined that it is difficult for the oven top cleaning device to move forward due to an obstacle, and the travelling trolley 1 is configured to take an action for avoiding the obstacle. The obstacle may, here, encompass not only a "part of oven equipment", but also an excessive amount of accumulated substance and irregularities of the road surface.

The load sensor 4 is, for example, a load cell and is attached to each of the pair of support arms 5 (at a point along each of the pair of support arms 5) that support the dozer 20, as illustrated in Fig. 6. In the example of Fig. 6, in a case where a load F acts on the dozer 20, a load F/2 is detected by each load sensor 4.

The rotary brush 30 included in the fallen powder sweeping means 3 is movable in the width direction of the travelling trolley 1 by a moving mechanism. The rotary brush 30 moves to a position beside the travelling trolley 1 and sweeps fallen powder accumulated at the position beside the travelling trolley 1 which cannot be reached by the dozer 20 (where the dozer 20 cannot collect fallen powder) toward a position in front of the dozer 20 (sweeps out fallen powder from a position beside the dozer 20 toward a position in front of the dozer 20). Furthermore, since the rotary brush 30 is movable in the width direction of the travelling trolley 1, it is possible for the travelling trolley 1 to avoid an obstacle and clean the road surface around the obstacle while keeping forward travelling by adjusting a position of the rotary brush 30 in the width direction.

As illustrated in Fig. 4, the fallen powder sweeping means 3 includes, as the moving mechanism for the rotary brush 30, a rail 31 provided along the width direction of the travelling trolley 1, a holding arm 32 slidable along the rail 31, and drive means 33 for sliding the holding arm 32 along the rail 31. The rotary brush 30 is held by the holding arm 32 and is thus movable in the width direction of the travelling trolley 1.

The drive means 33 can be any kind of drive means that can move the holding arm 32 in one axial direction. In the present embodiment, the drive means 33 is a linear actuator.

The holding arm 32 has an inverse L shape formed by a horizontal part 320 that extends in a forward direction ahead of the travelling trolley 1 and a hanging part 321 connected to a front end of the horizontal part 320. The horizontal part 320 of the holding arm 32 is provided with a slide member 35 that slides along the rail 31. The linear actuator that is the drive means 33 is configured such that a body 330 thereof is fixed to the travelling trolley 1 and a drive rod 331 thereof is coupled to the slide member 35. The rotary brush 30 is held at a lower end of the holding arm 32 (the hanging part 321). The rotary brush 30 includes a motor 300 for rotary driving. Furthermore, ON/OFF control of the rotary brush 30 and position control of the rotary brush 30 by the drive means 33 (linear actuator) are also performed by the control device (the control device mounted on the travelling trolley 1) in accordance with a predetermined program or a command from the control room.

The rotary brush 30 has a function to sweep fallen powder accumulated on the road surface at a position beside the dozer 20 that cannot be reached by the dozer 20 (where the dozer 20 cannot collect fallen powder) toward a position in front of the dozer 20 (sweeps out fallen powder at a position beside the dozer 20 toward a position in front of the dozer 20). Accordingly, a movement end of a center of the rotary brush 30 (an end of a movable range) is preferably located on a device outer side relative to an end of the dozer 20 in the width direction. Specifically, a distance L between a movement end e1 of the center of the rotary brush 30 (an end of a movable range) and an end e2 of the dozer 20 in the width direction illustrated in Fig. 2 is preferably approximately 300 mm to 1000 mm.

Furthermore, the rotary brush 30 is held at the lower end of the holding arm 32 (the hanging part 321) in an inclined state so that only a front end portion thereof in the lengthwise direction of the travelling trolley 1 makes contact with the road surface as illustrated in Fig. 5 in order to efficiently sweep out fallen powder accumulated on the road surface. An inclination angle α (an inclination angle with respect to a horizontal direction) of the rotary brush 30 in this case is preferably approximately 5 degrees to 30 degrees.

The rotary brush 30 rotates in such a direction that fallen powder accumulated on the road surface at a position beside the travelling trolley 1 can be swept toward a position in front of the travelling trolley 1 (fallen powder at a position beside the dozer 20 can be swept out toward a position in front of the dozer 20). Accordingly, in a case where fallen powder is swept toward a position in front of the travelling trolley 1 in a state where the rotary brush 30 has moved to a right side in a trolley traveling (forward traveling) direction as in the present embodiment, the rotary brush 30 rotates in a counterclockwise direction. On the other hand, in a case where fallen powder is swept toward a position in front of the travelling trolley 1 in a state where the rotary brush 30 has moved to a left side in the trolley traveling (forward traveling) direction, the rotary brush 30 rotates in a clockwise direction.

The travelling trolley 1 is provided with an optical distance measuring sensor (not illustrated) such as a laser range finder. This distance measuring sensor is used, for example, to (i) measure a position of an obstacle while the oven top cleaning device travels to acquire map data of a cleaning region in advance and (ii) measure a position of an obstacle while the oven top cleaning device (the travelling trolley 1) autonomously travels.

Next, preferable conditions of the brush 21 for collecting fallen powder provided at the lower end part of the dozer 20 are described.

Although a configuration and a material of the brush 21 are not limited in particular, preferably, the brush 21 has a brush length (bristle length) of 40 mm to 60 mm and a brush thickness of approximately 10 mm to 100 mm in order to particularly efficiently collect fallen powder accumulated on the road surface and achieve high fallen powder cleaning rate (fallen powder collection rate). Furthermore, the brush 21 is preferably provided so that tips of bristles thereof are pressed against the road surface. Furthermore, although the material of the brush 21 is not limited in particular, generally, the brush 21 is preferably made of a thermally-resistant fibrous material such as a metal fiber (e.g., a steel wire or a copper wire), a carbon fiber, a heat-resisting resin, or heat-resisting rubber.

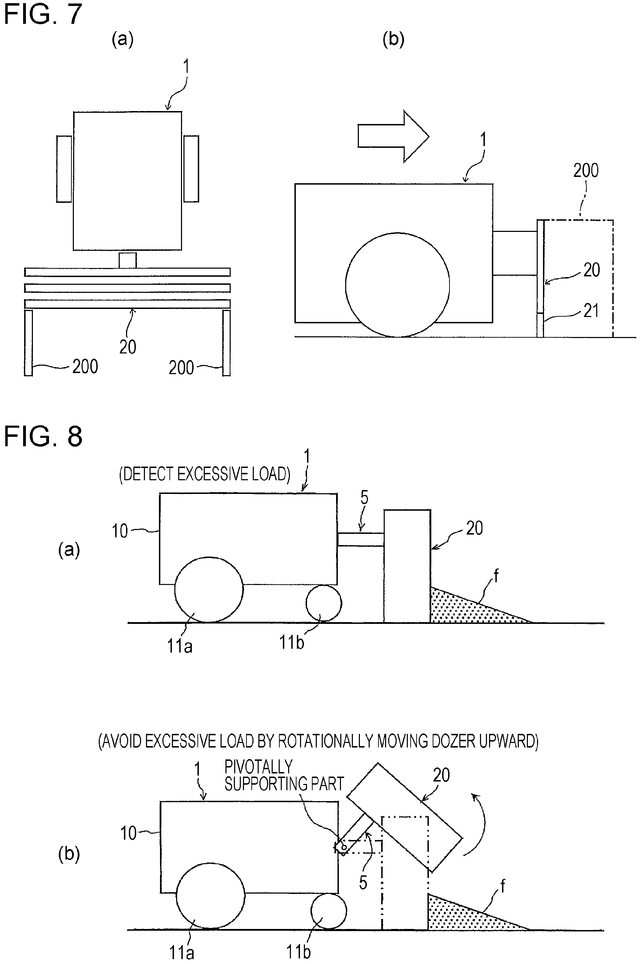

An experiment was conducted by using an experiment device illustrated in Fig. 7 (Fig. 7(a) is a plan view, and Fig. 7(b) is a side view) to survey how the brush length and thickness of the brush 21 of the dozer 20 and pressing of the tips of the brush bristles against the road surface influence a fallen powder collection rate. Note that a side dozer part 200 for preventing fallen powder from escaping sideways when fallen powder is pushed is provided on both sides of the dozer 20 of the experiment device of Fig. 7. In this experiment, a fallen powder collection rate was examined in both cases of a pressed state where the tips of the brush bristles are pressed against the road surface and a non-pressed state (the non-pressed state is a state where the brush is in contact with the road surface by its own weight, and the pressed state is a state where the brush is pressed against the road surface by an amount of approximately 10 mm from the state where the brush is in contact with the road surface by its own weight), while changing the brush length (bristle length) of the brush 21 attached to the dozer 20 of the experiment device among three levels of 20 mm, 40 mm, and 60 mm, changing the number of brushes each having a brush thickness of 10 mm among 1 to 3 to change a brush thickness (for example, the number of brushes is three in Fig. 7(a), and the number of brushes is one in Fig. 7(b)). Tables 1 and 2 show results. This shows that a particularly high fallen powder collection rate (75% or more) was obtained in a case where the brush 21 having a brush length (bristle length) of 40 mm to 60 mm and a brush thickness of approximately 10 mm to 30 mm was pressed against the road surface although a certain level of fallen powder collection rate was obtained irrespective of the brush length (bristle length) and a brush thickness and irrespective of a state of pressing of the tips of the brush bristles against the road surface.

**[Table 1]**

| (Tips of brush bristles are not pressed against road surface) | | | | |
|---|---|---|---|---|
| | | the number of brushes | | |
| | | 1 | 2 | 3 |
| fallen powder collection rate (%) | brush length 20 mm | 28.3 | 19.5 | 45.0 |
| | brush length 40 mm | 54.5 | 54.4 | 51.8 |
| | brush length 60 mm | 36.2 | 72.5 | 66.6 |

**[Table 2]**

| (Tips of brush bristles are pressed against road surface) | | | | |
|---|---|---|---|---|
| | | the number of brushes | | |
| | | 1 | 2 | 3 |
| fallen powder collection rate (%) | brush length 20 mm | 76.1 | 78.2 | 45.0 |
| | brush length 40 mm | 81.6 | 82.6 | 81.6 |
| | brush length 60 mm | 80.3 | 87.0 | 78.6 |

Fig. 8 is an explanatory view schematically illustrating another embodiment of the device according to the present invention (an explanatory view illustrating operation of a dozer). In this embodiment, a dozer 20 is rotationally movable upward via support arms 5, and when load sensors 4 (see Fig. 6) provided in the support arms 5 detect an excessive load (abnormal load), for example, when the load sensors 4 detect an excessive load (abnormal load) because an amount of fallen powder f is too large as illustrated in Fig. 8(a), the dozer 20 is rotationally moved upward and thus configured to avoid an excessive load state. In this case, the support arms 5 that support the dozer 20 are pivotally supported by a pivotally supporting part 50 at sides of a travelling trolley 1 so as to be rotatable. Note that the upward rotational movement of the dozer 20 may be automatically performed when the load sensors 4 detect an excessive load (abnormal load).

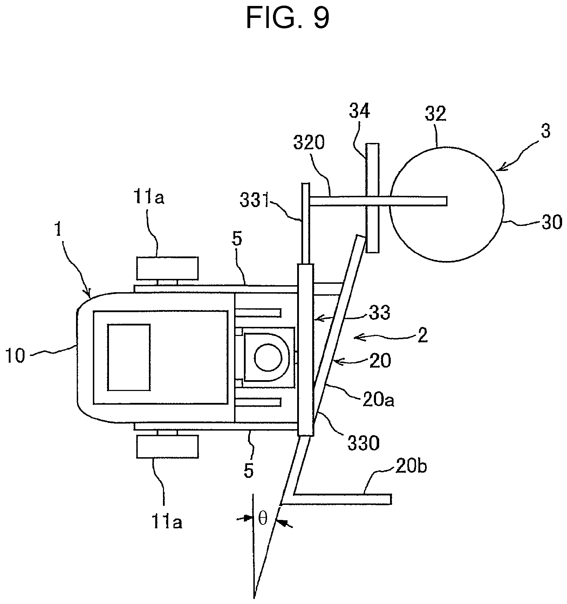

Fig. 9 is a plan view illustrating another embodiment of the device according to the present invention.

In this embodiment, a dozer body part 20a is inclined with respect to a width direction of a travelling trolley 1 so that one end side thereof to which a side dozer part 20b is connected is located closer to the travelling trolley 1 than the other end side. By thus disposing the dozer body part 20a not in parallel with the width direction but obliquely, fallen powder can be more smoothly moved to a position in front of the dozer body part 20a without remaining beside a rotary brush 30. An inclination θ of the dozer body part 20a with respect to the width direction of the travelling trolley 1 is preferably approximately 20 degrees to 45 degrees since a sufficient effect cannot be obtained in a case where the inclination θ is too small and the device size becomes large in a case where the inclination θ is too large.

Furthermore, a holding arm 32 that holds the rotary brush 30 is also provided with a fallen powder collecting plate 34 for auxiliary collection of fallen powder behind the rotary brush 30. By thus providing the fallen powder collecting plate 34, failure to collect fallen powder behind the rotary brush 30 can be prevented.

Although a positional relationship between the rotary brush 30 and the side dozer part 20b in the width direction of the travelling trolley 1 in the present embodiment is reverse to that in the embodiment illustrated in Figs. 1 to 6, the positional relationship between the rotary brush 30 and the side dozer part 20b is selected as appropriate in accordance with such as a layout of an oven top part of a coke oven to be cleaned. In the present embodiment, illustration of the rail 31 and the slide member 35 for moving the rotary brush 30 in the width direction of the travelling trolley 1 is omitted for simplification of the drawing. Other constituent elements of the present embodiment are similar to those in the embodiment illustrated in Figs. 1 to 6 and are given identical reference signs, and detailed description thereof is omitted.

Next, cleaning work using the oven top cleaning device according to the present invention is described by taking the device according to the above embodiment as an example. Cleaning of an oven top part of a coke oven using the cleaning device according to the above embodiment is basically to move the travelling trolley 1 forward, collect fallen powder accumulated on the road surface in front of the travelling trolley 1 by the dozer 20 that is the fallen powder collecting means 2, and gather the collected fallen powder at a predetermined place. More specifically, the following cleaning work is performed.
(i) The travelling trolley 1 is moved forward (moved straight), fallen powder accumulated on the road surface in front of the travelling trolley 1 is collected by the dozer 20, the rotary brush 30 is driven to rotate in a state where the rotary brush 30 has moved to a position beside the travelling trolley 1 (a position at one side in the width direction), fallen powder accumulated on the road surface at the position beside the travelling trolley 1 which cannot be reached by the dozer 20 (where fallen powder cannot be collected by the dozer 20) is swept toward a position in front of the dozer 20 (swept out from a position beside the dozer 20 toward a position in front of the dozer 20), and this fallen powder is also collected by the dozer 20.
(ii) In a case where there is an obstacle which the rotary brush 30 encounters during the cleaning (i), the rotary brush 30 is moved as appropriate in the width direction of the travelling trolley 1 to clean the road surface around the obstacle (sweep fallen powder by the rotary brush 30) while avoiding the obstacle.
(iii) After fallen powder accumulated on the road surface in a predetermined region is collected by the dozer 20 by the operations (i) and (ii), the travelling trolley 1 is moved to a predetermined fallen powder gathering place, and the fallen powder is gathered in this place. The gathered fallen powder is put into a coal charging hole by a worker and can thereby be processed, and therefore the fallen powder gathering place is typically located close to the coal charging hole.

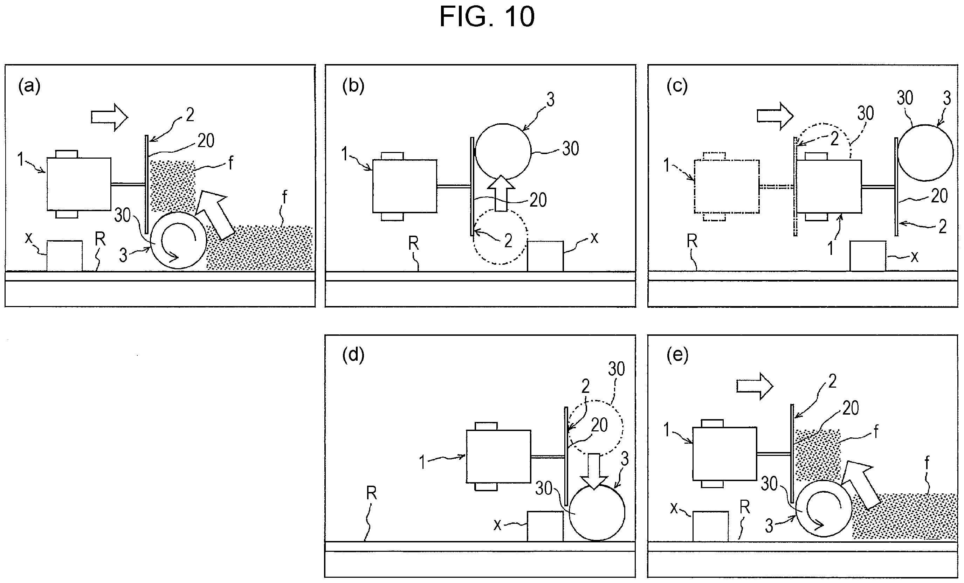

Figs. 10(a) to 10(e) illustrate an example of operations (operating procedure) performed in a case where a predetermined region beside a rail for a coal charging car is cleaned by the oven top cleaning device according to the present embodiment. In Figs. 10(a) to 10(e), R is the rail for a coal charging car, and x is an obstacle beside the rail for a coal charging car (e.g., a sensor for determining a position of a coal charging car).
(a) The travelling trolley 1 is moved forward (moved straight) along the rail for a coal charging car, and fallen powder f accumulated on the road surface in front of the travelling trolley 1 is collected by the dozer 20. The collection of the fallen powder by the dozer 20 is also performed in the same was in (b) to (e) below. Furthermore, the rotary brush 30 is driven to rotate in a state where the rotary brush 30 has been moved to a position close to the rail R for a coal charging car (a position beside the travelling trolley 1), and fallen powder f accumulated on the road surface close to the rail R for the coal charging car is swept toward a position in front of the dozer 20 (swept from a position beside the dozer 20 to a position in front of the dozer 20), and this fallen powder f is also collected by the dozer 20.
(b) When the travelling trolley 1 approaches or makes contact with the obstacle x beside the rail for a coal charging car by further travelling forward, the travelling trolley 1 is stopped, and the rotary drive of the rotary brush 30 is also stopped. Next, the rotary brush 30 is evacuated to a position where the obstacle x can be avoided by moving the rotary brush 30 in the width direction of the travelling trolley 1.
(c) The travelling trolley 1 is moved forward again and is then stopped at a portion where the rotary brush 30 passes the obstacle x.
(d) The evacuated rotary brush 30 is moved to a position close to the rail R for a coal charging car by moving the rotary brush 30 in the width direction of the travelling trolley 1.
(e) As in (a) described above, again, the travelling trolley 1 is moved forward, fallen powder f accumulated on the road surface in front of the travelling trolley 1 is collected by the dozer 20, fallen powder f accumulated on the road surface close to the rail R for a coal charging car is swept toward a position in front of the dozer 20 by the rotary brush 30 (swept out from a position beside the dozer 20 to a position in front of the dozer 20), and this fallen powder f is also collected by the dozer 20.

By repeating the above operations (a) to (e), fallen powder f is collected while avoiding a plurality of obstacles x, and every time fallen powder f in a predetermined region (e.g., a region corresponding to approximately three to five ovens (5 m to 10 m)) is collected, the travelling trolley 1 is moved to a position close to a coal charging hole p by changing a course of the travelling trolley 1 and the collected fallen powder f is placed close to the coal charging hole p. Thereafter, the travelling trolley 1 is moved backward to a position close to the rail, the body is turned by 90 degrees, and the cleaning work in (a) to (e) is performed again. The fallen powder gathered close to the coal charging hole p is put into the coal charging hole p by a worker at an appropriate timing.

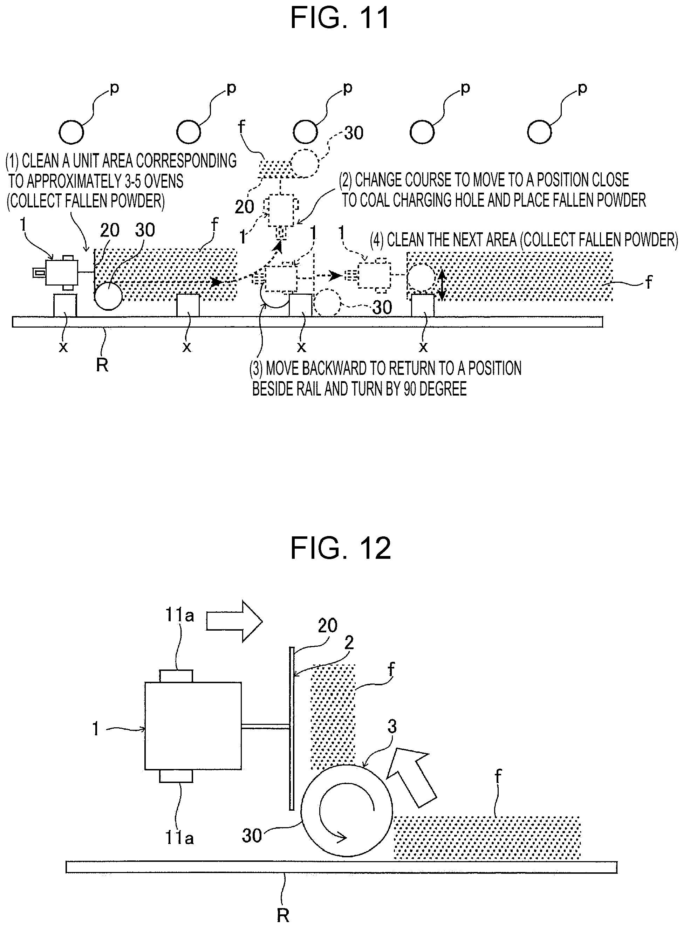

Fig. 12 illustrates a situation where fallen powder f accumulated on the road surface beside the travelling trolley 1 (in a region close to the rail R for a coal charging car) is swept toward a position in front of the travelling trolley 1 by the rotary brush 30. Since the rotary brush 30 is held in an inclined state so that only the front end portion thereof in the lengthwise direction of the travelling trolley 1 makes contact with the road surface, fallen powder f accumulated on the road surface is efficiently swept out.

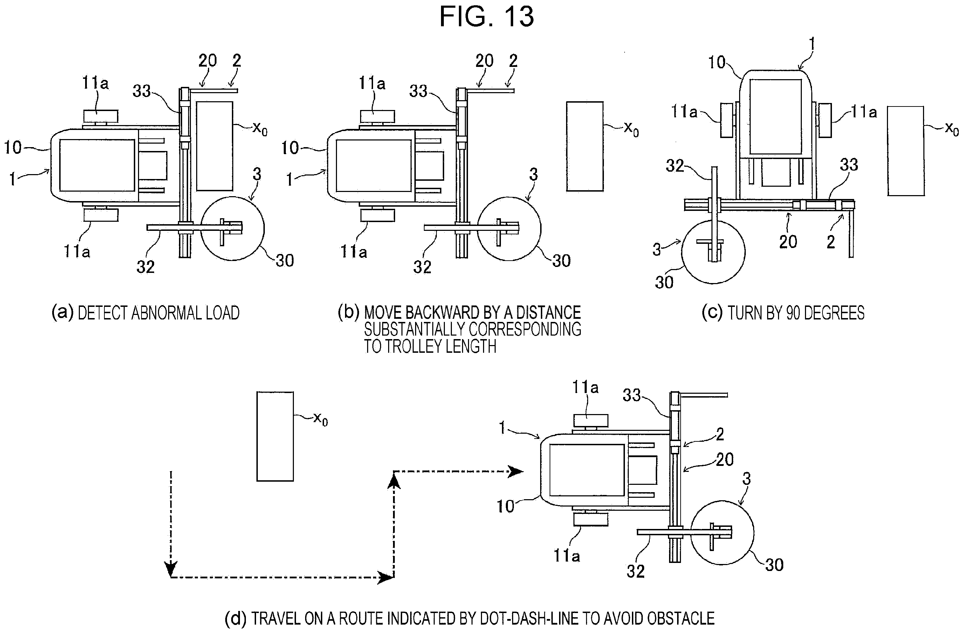

Fig. 13 illustrates an example of avoiding operation of the travelling trolley 1 performed in a case where an excessive load (abnormal load) on the dozer 20 is detected by the load sensors 4. In a case where the dozer 20 of the oven top cleaning device travelling forward hits an obstacle x₀ (or an excessive amount of fallen powder is collected or the dozer 20 is caught on irregularities of the road surface) and an excessive load (abnormal load exceeding a specified value) is detected by the load sensors 4 (Fig. 13(a)), the travelling trolley 1 is moved backward by a distance substantially corresponding to a length of the travelling trolley 1 (Fig. 13(b)), the travelling trolley 1 is turned by 90 degrees (Fig. 13(c)), then the travelling is resumed, for the turning is repeated for avoiding the obstacle x₀, and then the travelling trolley 1 returns to an original travelling route and continues to travel forward (Fig. 13(d)). Note that the avoiding operation of the travelling trolley 1 described above may be programmed in advance, and the avoiding operation may be automatically performed in accordance with this program in a case where an excessive load (abnormal load) on the dozer 20 is detected by the load sensors 4.

In the case of the oven top cleaning device according to the embodiment illustrated in Fig. 8, when an excessive load (abnormal load) is detected by the load sensors 4, an excessive load state can be avoided by rotationally moving the dozer 20 upward, as described earlier.

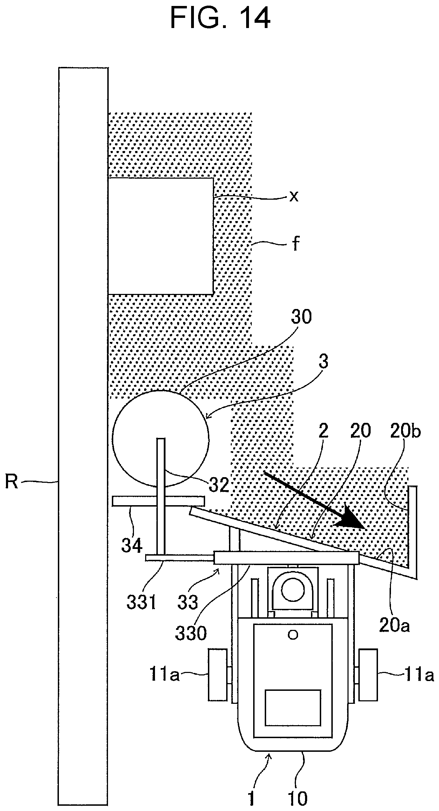

Fig. 14 illustrates a state of cleaning work beside a rail for a coal charging car by the oven top cleaning device according to the embodiment in Fig. 9. In this embodiment, the dozer 20 (the dozer body part 20a) is inclined with respect to the width direction of the travelling trolley 1. Accordingly, fallen powder f swept out by the rotary brush 30 moves away from the rotary brush 30 in front of the dozer 20 as the travelling trolley 1 travels forward. Accordingly, fallen powder f is unlikely to remain beside the rotary brush 30, the fallen powder f can be collected more properly by the dozer 20, and failure to collect fallen powder f behind the rotary brush 30 caused by remaining fallen powder f beside the rotary brush 30 can be prevented. Furthermore, the fallen powder collecting plate 34 attached to the holding arm 32 performs auxiliary collection of fallen powder f behind the rotary brush 30, and therefore failure to collect fallen powder f behind the rotary brush 30 can be prevented with more certainty.

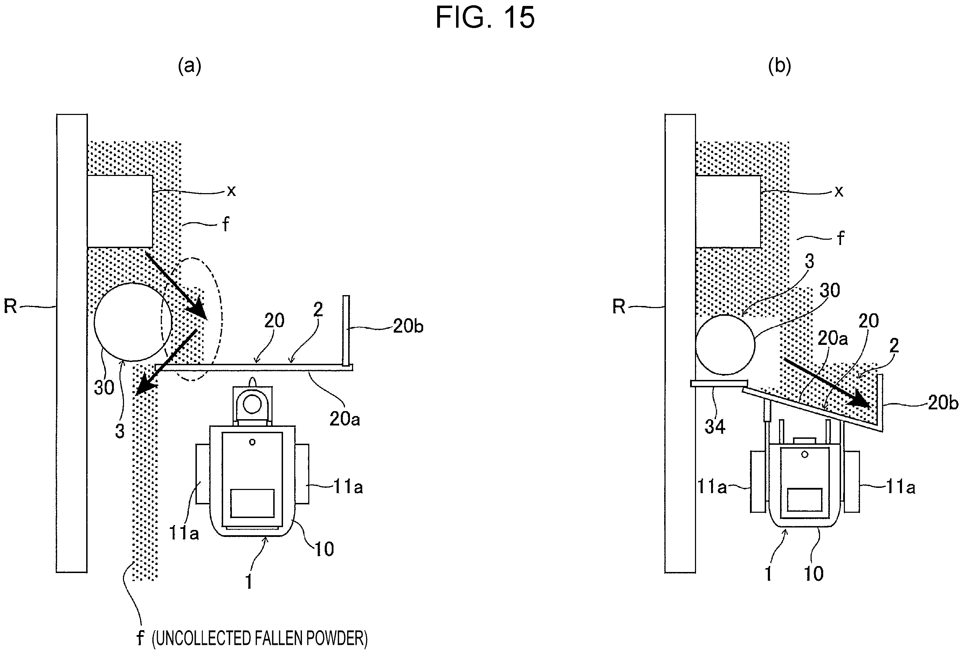

This is more specifically described with reference to Fig. 15. Fig. 15(a) and Fig. 15(b) illustrate a state of cleaning work beside a rail for a coal charging car by the oven top cleaning device according to the embodiment in Figs. 1 to 3 and Fig. 9, respectively. In the case of Fig. 15(a), fallen powder f remains in a region surrounded by the ellipse (virtual line) beside the rotary brush 30, and this remaining fallen powder f hinders movement of fallen powder f frontward. This may lead to failure to collect fallen powder f escaping toward behind the rotary brush 30. On the other hand, in the case of Fig. 15(b), fallen powder f swept out by the rotary brush 30 moves away from the rotary brush 30 in front of the dozer 20 as the travelling trolley 1 moves forward since the dozer 20 (the dozer body part 20a) is inclined, as described above. As a result, fallen powder f is less likely to remain beside the rotary brush 30. This makes it possible to collect fallen powder f more properly by the dozer 20 and to prevent failure to collect fallen powder f escaping toward behind the rotary brush 30 illustrated in Fig. 15(a) with more certainty. Furthermore, since the fallen powder collecting plate 34 attached to the holding arm 32 performs auxiliary collection of fallen powder f behind the rotary brush 30, failure to collect fallen powder f escaping toward behind the rotary brush 30 can be prevented with more certainty.

Although cleaning work performed by the oven top cleaning device according to the present invention (e.g., the cleaning work illustrated in Figs. 10(a) to 10(e) and Fig. 11) may be performed in accordance with a real-time command from the control room, it is preferable to create a map of a region to be cleaned in advance, program a route of the travelling trolley 1 and movement of the rotary brush 30 (e.g., a movement pattern and ON/OFF of the rotary drive) on the basis of the map created, and automatically perform cleaning work by the oven top cleaning device in accordance with the program since not only an obstacle beside a rail for a coal charging car such as the one illustrated in Figs. 10(a) to 10(e) and Fig. 11 but also an obstacle such as an ascending pipe are present on a road surface on an oven top part of a coke oven. In this case, it is preferable to mount an optical distance measurement sensor (e.g., a laser range finder) on the oven top cleaning device, cause the oven top cleaning device to travel in a region to be cleaned just to create a map in advance, measure a position of each obstacle by the mounted distance measurement sensor to acquire map data (map data including the obstacle position), and create the program on the basis of the map data. Furthermore, it is preferable to perform control for measuring a surrounding environment by the mounted distance measurement sensor during autonomous travelling of the oven top cleaning device (the travelling trolley 1) and estimating a current position by matching between data of the measured surrounding environment and the map data.

Fig. 16 illustrates a result of measurement of a surrounding environment (a position of an obstacle) by an optical distance measurement sensor (a laser range finder) obtained by causing an oven top cleaning device provided with the distance measurement sensor to travel on a road surface on an oven top part to acquire map data. Fig. 16(a) illustrates actual positions of two ascending pipes G₁ and G₂ and measurement positions (1) to (4) where a surrounding environment was measured by the distance measurement sensor, and Fig. 16(b) illustrates results of measurements in the measurement positions (1) to (4). In Fig. 16(b), the plots in the measurement positions (1) to (4) indicate coordinates of positions of the two ascending pipes G₁ and G₂ obtained by the distance measurement sensor, and the virtual-line circles indicate positions of the ascending pipes G₁ and G₂ found from the plots. Table 3 illustrates position data of the two ascending pipes G₁ and G₂ obtained by the measurement together with actual position data.

**[Table 3]**

| condition | radius r1 of ascending pipe G₁ (mm) | radius r2 of ascending pipe G₂ (mm) | distance between ascending pipes G₁ and G₂ (mm) |
|---|---|---|---|
| actual dimension | 500 | 500 | 500 |
| measurement position (1) | 468 | 479 | 521 |
| measurement position (2) | 467 | 477 | 521 |
| measurement position (3) | 466 | 477 | 522 |
| measurement position (4) | 474 | 480 | 514 |
| minimum error *1 | 26 | 20 | 14 |
| maximum error *2 | 34 | 23 | 22 |

| | | | |
|---|---|---|---|
| *1 minimum error between measurement data and actual dimension data *2 maximum error between measurement data and actual dimension data | | | |

Table 3 shows a maximum error and a minimum error between the measurement data and the actual data. In a case where both of the maximum error and the minimum error are equal to or less than 50 mm, it is considered that a route that allows the travelling trolley 1 to travel between the ascending pipes G₁ and G₂ without a problem can be generated. According to Table 3, both of the maximum error and the minimum error of the measurement data from the actual data are equal to or less than 50 mm in all of the measurement positions (1) to (4). This shows that positions of the ascending pipes G₁ and G₂ were measured (detected) almost correctly. It can therefore be said that map data in which a position of an obstacle is accurately grasped can be acquired by measurement using an optical distance measurement sensor mounted on an oven top cleaning device, and a route of the oven top cleaning device can be generated.

As described above, the oven top cleaning device according to the present invention can properly and efficiently clean an oven top part of a coke oven on which an obstacle is present and can perform the cleaning irrespective of whether or not a coal charging car is operating since the oven top cleaning device self-travels on the oven top part irrespective of the coal charging car. Furthermore, the oven top cleaning device according to the present invention does not have fallen powder suction means and a hopper, and therefore has a simple and compact structure, is easy to maintain, and allows maintenance to be done even during operation of the coal charging car.

Although a case where fallen powder accumulated on an oven top part of a coke oven is cleaned by a cleaning device has been described in the above embodiments, the cleaning device according to the present invention can be used for cleaning in various places where an accumulated substance is present and can clean various kinds of accumulated substances.

### Examples

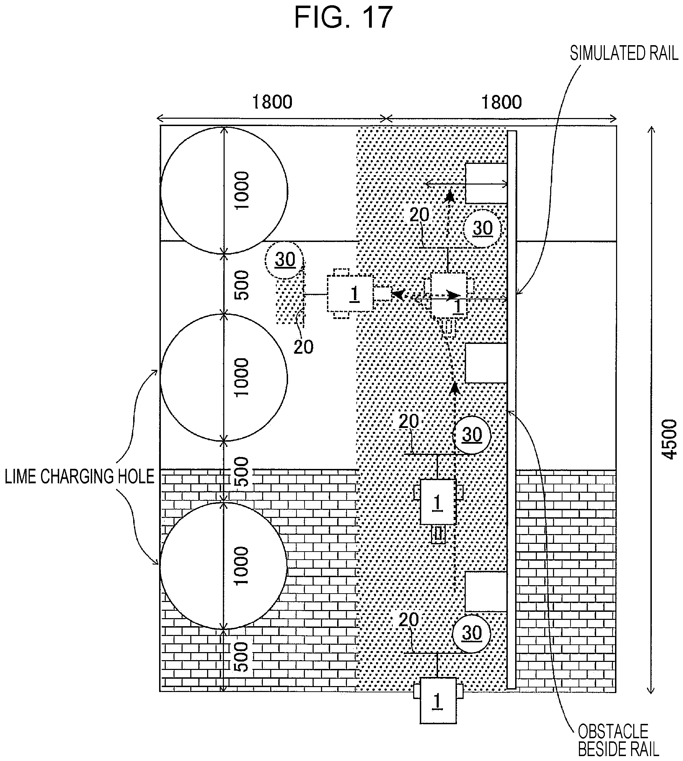

In a simulated facility illustrated in Fig. 17, coal powder was scattered as fallen powder in a region having a width of 500 mm and a length of 4500 mm beside a rail for a coal charging car, and cleaning tests were conducted by using the oven top cleaning device of Fig. 1 according to the present invention, the oven top cleaning device of Fig. 9 according to the present invention, and an oven top cleaning device having no rotary brush. The coal powder was scattered in three levels of 0.8 kg/m², 1.5 kg/m², and 4.5 kg/m².

The oven top cleaning devices are manually operated to perform cleaning work illustrated in Figs. 10(a) to 10(e) and Fig. 11, and fallen powder collection rates were examined. Results are shown in Table 4, which shows that the oven top cleaning devices according to the present invention (the device of Fig. 1 and the device of Fig. 9) can clean the oven top part more efficiently than the oven top cleaning device having no rotary brush. Table 4 also shows that efficiency of cleaning of the oven top cleaning device of Fig. 9 is higher than efficiency of cleaning of the oven top cleaning device of Fig. 1.

**[Table 4]**

| | | amount of coal powder accumulated on road surface | | |
|---|---|---|---|---|
| | | 0.8 kg/m² | 1.5 kg/m² | 4.5 kg/m² |
| fallen powder collection rate (%) | device of Fig. 1 | 8 | 12 | 15 |
| | device of Fig. 9 | 33 | 40 | 47 |
| | no rotary brush | 6 | 10 | 12 |

### Reference Signs List

- 1: travelling trolley
- 2: fallen powder collecting means (collecting means)
- 3: fallen powder sweeping means (sweeping means)
- 4: load sensor
- 5: support arm
- 10: body
- 11a,11b: wheel
- 20: dozer
- 20a: dozer body part
- 20b: side dozer part
- 21: brush
- 30: rotary brush
- 31: rail
- 32: holding arm
- 33: drive means
- 34: fallen powder collecting plate
- 35: slide member
- 50: pivotally supporting part
- 300: motor
- 320: horizontal part
- 321: hanging part
- 330: body
- 331: drive rod
- p: coal charging hole
- f: fallen powder (accumulated substance)
- e1: movement end
- e2: end
- x,x₀: obstacle
- R: rail for coal charging car
- G₁,G₂: ascending pipe

## Claims

1. A cleaning device that travels on a road surface and collects an accumulated substance accumulated on the road surface, comprising:
a travelling trolley (1);
collecting means (2) that is provided on a front face part of the travelling trolley (1) and collects the accumulated substance accumulated on the road surface in front of the travelling trolley (1) as the travelling trolley (1) travels forward; and
sweeping means (3) that is provided on the travelling trolley (1) and sweeps the accumulated substance accumulated on the road surface beside the travelling trolley (1) toward a position in front of the travelling trolley (1).

2. The cleaning device according to Claim 1, wherein
the sweeping means (3) includes a rotary brush (30) that is movable in a width direction of the travelling trolley (1).

3. The cleaning device according to Claim 2, wherein
the sweeping means (3) includes a rail (31) provided along the width direction of the travelling trolley (1), a holding arm (32) slidable along the rail (31), and drive means (33) that slides the holding arm (32) along the rail (31); and
the rotary brush (30) is held by the holding arm (32).

4. The cleaning device according to Claim 3, wherein
the holding arm (32) is also provided with a collecting plate (34) that collects the accumulated substance at a position behind the rotary brush (30).

5. The cleaning device according to any one of Claims 2 to 4, wherein
the rotary brush (30) is held in an inclined state so that only a front end portion thereof in a lengthwise direction of the travelling trolley (1) makes contact with the road surface.

6. The cleaning device according to any one of Claims 1 to 5, further comprising a load sensor (4) that measures a load applied to the collecting means (2).

7. The cleaning device according to any one of Claims 1 to 6, wherein
the collecting means (2) is a dozer (20) whose lower end makes contact with the road surface.

8. The cleaning device according to Claim 7, wherein
the dozer (20) includes a brush (21) on a lower end part thereof.

9. The cleaning device according to Claim 7 or 8, wherein
the dozer (20) includes a dozer body part (20a) that is provided along the width direction of the travelling trolley (1) and a side dozer part (20b) that is connected to one end of the dozer body part (20a) and is for surrounding the accumulated substance swept from one side in the width direction by the sweeping means (3) so that the accumulated substance does not escape to the other side in the width direction.

10. The cleaning device according to Claim 9, wherein
the dozer body part (20a) is inclined with respect to the width direction of the travelling trolley (1) so that the one end thereof to which the side dozer part (20b) is connected is located closer to the travelling trolley (1) than the other end thereof.

11. The cleaning device according to any one of Claims 7 to 10, wherein
the dozer (20) is supported on the travelling trolley (1) by a support arm (5) interposed therebetween; and
the cleaning device further includes, at a point along the support arm (5), a load sensor (4) that measures a load applied to the collecting means (2).

12. The cleaning device according to Claim 11, wherein
the dozer (20) is rotationally movable upward about the support arm (5) and rotationally moves upward when an excessive load is detected by the load sensor (4).

13. A method for cleaning an oven top part of a coke oven by causing the cleaning device according to any one of Claims 1 to 12 to travel on the oven top part of the coke oven as the road surface and collecting the accumulated substance accumulated on the road surface, the method comprising:
causing the travelling trolley (1) to travel forward;
causing the collecting means (2) to collect the accumulated substance accumulated on the road surface in front of the travelling trolley (1) while causing the sweeping means (3) to sweep the accumulated substance accumulated on the road surface beside the travelling trolley (1) toward a position in front of the travelling trolley (1); and
moving the travelling trolley (1) to a place close to a coal charging hole after collection of the accumulated substance in a predetermined region and gathering the accumulated substance in the place.

14. The method for cleaning an oven top part of a coke oven according to Claim 13, wherein
in a case where a region beside a rail for a coal charging car on the oven top part of the coke oven is cleaned by using the cleaning device in which the collecting means (2) is a dozer (20) whose lower end makes contact with the road surface and the sweeping means (3) includes a rotary brush (30) that is movable in the width direction of the travelling trolley (1),
the travelling trolley (1) is moved forward along the rail for the coal charging car, the accumulated substance accumulated on the road surface in front of the travelling trolley (1) is collected by the dozer (20) while sweeping the accumulated substance accumulated on the road surface close to the rail for the coal charging car beside the travelling trolley (1) toward a position in front of the travelling trolley (1) by driving the rotary brush (30) to rotate in a state where the rotary brush (30) has moved to a position beside the travelling trolley (1); and
when the travelling trolley (1) passes an obstacle beside the rail for the coal charging car, the rotary brush (30) is moved in the width direction of the travelling trolley (1) to avoid the obstacle and sweep the accumulated substance accumulated on the road surface around the obstacle toward a position in front of the travelling trolley (1).

15. The method for cleaning an oven top part of a coke oven according to Claim 14, further comprising:
causing the cleaning device provided with an optical distance measurement sensor to travel in a region to be cleaned and thereby measuring a position of the obstacle by the distance measurement sensor to acquire map data;
programming a route of the travelling trolley (1) and movement of the rotary brush (30) on a basis of the map data; and
automatically performing cleaning by the cleaning device in accordance with the program.
